Europäisches Patentamt

(19) European Patent Office

Office européen des brevets

(11) Numéro de publication : **0 291 368 B1**

## (12) FASCICULE DE BREVET EUROPEEN

(45) Date de publication du fascicule du brevet :
**16.10.91 Bulletin 91/42**

(51) Int. Cl.$^5$ : **G01C 19/64**

(21) Numéro de dépôt : **88400700.6**

(22) Date de dépôt : **23.03.88**

(54) **Procédé et dispositif de détection des variations de temps de propagation dans un interféromètre en anneau, et leur application au contrôle de longueur d'onde.**

(30) Priorité : **27.03.87 FR 8704268**

(43) Date de publication de la demande :
**17.11.88 Bulletin 88/46**

(45) Mention de la délivrance du brevet :
**16.10.91 Bulletin 91/42**

(84) Etats contractants désignés :
**DE GB**

(56) Documents cités :
**FR-A- 2 555 739**
**GB-A- 2 134 248**

(73) Titulaire : **THOMSON-CSF**
**51, Esplanade du Général de Gaulle**
**F-92800 Puteaux (FR)**

(72) Inventeur : **Lefevre, Hervé**
**THOMSON-CSF SCPI 19, avenue de Messine**
**F-75008 Paris (FR)**
Inventeur : **Rolly, Didier**
**THOMSON-CSF SCPI 19, avenue de Messine**
**F-75008 Paris (FR)**

(74) Mandataire : **Turlèque, Clotilde et al**
**THOMSON-CSF SCPI**
**F-92045 PARIS LA DEFENSE CEDEX 67 (FR)**

## Description

L'invention se rapporte aux interféromètres en anneau et plus particulièrement à un procédé de détection des variations de temps de propagation dans un tel interféromètre, au dispositif de mise en oeuvre de ce procédé, et à son application au contrôle de la longueur d'onde moyenne de la source.

Dans un interféromètre en anneau, deux ondes contra-rotatives se propagent dans un guide d'onde en anneau, par exemple une bobine de fibre optique ; les deux ondes après propagation sont parfaitement en phase aux extrémités de la bobine en l'absence d'effets non réciproques, et notamment en l'absence d'effet SAGNAC dû à la rotation de l'interféromètre.

Au contraire, lorsque l'interféromètre subit une rotation par rapport à un repère galiléen, le déphasage entre les deux ondes émergeant des deux extrémités de la bobine est donné par

$$\Delta\emptyset = \frac{4\pi LR}{\lambda c}\omega,$$

où L est la longueur de la bobine, R son rayon, $\lambda$ la longueur d'onde, c, la vitesse de la lumière dans le vide et $\omega$ la vitesse de rotation.

En l'absence d'autres effets non réciproques, c'est-à-dire en l'absence de champ magnétique et donc d'effet FARADAY, et en l'absence de déplacement de matière et donc d'effet FIZEAU, la mesure du déphasage conduit à une mesure de la vitesse de rotation, à condition que tous les autres paramètres soient stables, notamment la longueur d'onde de la source.

Or cette longueur d'onde varie, en particulier en fonction de la température. Pour une source constituée par une diode superluminescente, ou "DSL", sur arseniure de gallium, la variation de longeur d'onde de la source est de l'ordre de $4 \times 10^{-4}$ par degré Celsius. Cette variation conduit à une variation correspondante du temps de propagation de la lumière dans le guide d'onde à cause de la dispersion.

Compte tenu de la précision maintenant obtenue dans la mesure de vitesse par un interféromètre en anneau à fibre optique utilisant une DSL comme source et une fibre optique monomode à conservation de polarisation, ces variations de longueur d'onde affectent la précision de la mesure. En conséquence, il est nécessaire de les évaluer, soit pour le corriger, soit pour en tenir compte dans la mesure du déphasage.

Il est connu par la demande de brevet GB-A-2134248 d'utiliser une modulation de phase asymétrique pour détecter une variation de phase non cyclique dans un interféromètre en anneau à fibre optique.

La présente invention a pour but d'utiliser ce type de modulation en vue de dissocier l'effet à mesurer, effet Sagnac lié à la vitesse de rotation de l'effet de la variation de longueur d'onde, comme il sera expliqué ci-après.

Selon l'invention, un procédé de détection des variations de temps de propagation dans un interféromètre en anneau utilisant une modulation de phase asymétrique est caractérisé en ce qu'il consiste à effectuer une modulation de phase selon des créneaux asymétriques sur l'onde à une extrémité de l'interféromètre, la période de la modulation étant double du temps de propagation moyen dans la fibre, et à extraire du signal détecté à la sortie de l'interféromètre des impulsions à la fréquence double de la fréquence de modulation dont la durée est variable avec la variation du temps de propagation.

L'invention a également pour objet un dispositif de détection des variations de temps de propagation dans un interféromètre en anneau, comportant un modulateur de phase, caractérisé en ce que le modulateur de phase est placé à une extrémité de l'interféromètre commandé par un signal de commande de période double du temps de propagation initial et formé de créneaux asymétriques, le signal de sortie du détecteur de l'interféromètre étant traité dans un circuit de traitement qui en extrait un signal à la fréquence de modulation caractéristique d'un déphasage non réciproque à mesurer, et un signal caractéristique des variations de temps de propagation.

L'invention a enfin pour objet l'application de ce procédé, et du dispositif correspondant, au contrôle de la longueur d'onde moyenne de la source utilisée dans l'interféromètre.

L'invention sera mieux comprise et d'autres caractéristiques apparaîtront à l'aide de la description qui suit en référence aux figures annexées.

La figure 1 représente un interféromètre en anneau à fibre optique ;

Les figures 2 et 3 sont des diagrammes illustrant un procédé utilisé actuellement pour mesurer le déphasage dû à la rotation d'un interféromètre en anneau utilisé en gyromètre ;

Les figures 4, 5, 6 et 7 sont des diagrammes de signaux qui illustrent le procédé de détection suivant l'invention, et notamment le signal de modulation et les signaux détectés respectivement sans rotation et sans variation de temps de propagation, avec rotation et sans variation de temps de propagation, sans rotation et avec variation de temps de propagation, et enfin avec rotation et variation de temps de propagation ;

La figure 8 représente des diagrammes de signaux qui illustrent une variante du procédé de détection selon l'invention, lorsqu'il n'y a ni rotation ni variation du temps de propagation.

La figure 9 illustre la même variante lorsqu'une variation de temps de propagation s'est produite, en l'absence de rotation ;

La figure 10 illustre la même variante lorsqu'il y a à la fois variation de temps de propagation et décalage de phase due à une rotation ;

Les figures 11 et 12 sont des schémas de détail du circuit de traitement de la figure 1, respectivement pour les deux variantes du procédé de détection décrites.

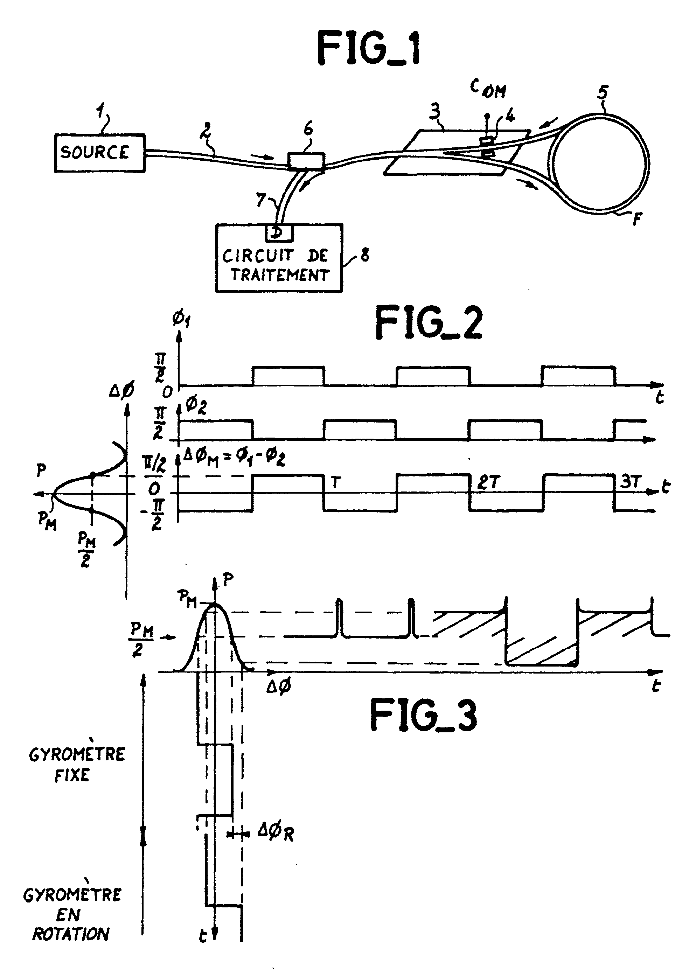

La figure 1 représente schématiquement un interféromètre en anneau à fibre optique. Il comporte une source de lumière à faible cohérence, 1, par exemple une diode superluminescente ou "DSL" AsGa, dont le spectre s'étend sur 40 μm, c'est-à-dire de + ou − 5% autour de la longueur d'onde moyenne ; cette source 1 est couplée à une extrémité d'une fibre optique 2, monomode et à conservation de polarisation, dont l'autre extrémité est couplée à l'entrée d'un séparateur en Y sur niobate de lithium, 3. Des électrodes sont prévues de part et d'autre de l'une des branches de sortie du séparateur, pour réaliser un modulateur de phase, 4, une tension de commande de modulation de phase $C_{OM}$ pouvant être appliquée entre ces électrodes. Les deux extrémités d'une bobine 5 de fibre optique monomode à conservation de polarisation sont couplées aux extrémités des deux branches du séparateur 3. Comme il est connu, les couplages des extrémités de fibre optique aux guides d'onde du séparateur 3 sont de préférence réalisés selon des faces inclinées par rapport à l'axe longitudinal des guides pour éviter les réflexions parasites.

Un composant dérivateur de lumière 6, connecté à un guide de sortie 7, transmet à un détecteur D les ondes après séparation, circulation dans la bobine de fibre et recombinaison. Un circuit de traitement 8 traite le signal détecté pour en extraire le signal utile, par exemple donnant une mesure de la vitesse de rotation $\omega$ lorsque cet interféromètre en anneau est utilisé en gyromètre.

Dans un tel interféromètre en anneau à fibre optique utilisé en gyromètre, il est connu d'améliorer la sensibilité, et donc la mesure du décalage de phase entre les deux ondes contra-rotatives, en introduisant une modulation de phase à l'une des deux extrémités de l'anneau. Cette modulation affecte une onde avant son parcours dans la bobine de fibre alors que l'autre la subit avec un retard égal au temps de propagation dans la bobine. La modulation habituellement choisie est une modulation en créneaux symétriques, alternativement $+ \pi/2$ et 0, dont la demi-période T/2 est, de préférence, égale au temps de propagation initial tp = to dans la fibre, soit $\frac{T}{2} = to = \frac{nL}{c}$. Le décalage de phase entre les deux ondes, recombinées après circulation dans la fibre, subit alors une modulation égale à la différence entre le signal de modulation et le même signal décalé du temps de propagation. Dans le signal détecté, l'excursion de phase autour de zéro conduit à une variation du signal autour du maximum de la courbe en $Cos^2$ du déphasage $\Delta\emptyset$. En l'absence de déphasage dû aux effets non réciproques, notamment dû à la rotation, cette excursion de phase est symétrique ; lorsqu'un déphasage supplémentaire $\Delta\emptyset_R$ dû à la rotation s'y ajoute, le signal change d'allure et a une composante à la période de la modulation dont l'amplitude varie avec le déphasage supplémentaire.

La figure 2 illustre la modulation utilisée selon ce procédé de mesure connu. La première courbe représente le déphasage $\emptyset_1$ appliqué à l'onde entrant par l'extrémité de la fibre pourvue du modulateur de phase 4 ; la seconde courbe illustre le déphasage $\emptyset_2$ appliqué à l'onde tournant dans l'autre sens, exactement décalé du temps de propagation to par rapport à $\emptyset_1$ ; la troisième courbe représente la modulation $\Delta\emptyset_M$ de la différence de phase des deux ondes, en l'absence de rotation ; la courbe en $Cos^2$ qui représente la puissance de sortie en fonction du déphasage $\Delta\emptyset$ entre les deux ondes : $P = P_M \cdot Cos^2 \Delta\emptyset/2$ a également été représentée : $P_M$ est la puissance de sortie maximale obtenue pour $\Delta\emptyset = 0$ et pour les paliers de décalage de phase $+\frac{\pi}{2}$ et $-\frac{\pi}{2}$, le signal de sortie a une amplitude $P_M/2$.

La courbe représentant la variation de déphasage résultant de la modulation $\Delta\emptyset_M$ et d'un décalage de phase dû à la rotation $\Delta\emptyset_R$ en fonction du temps, et le signal détecté correspondant P en fonction du temps sont représentés sur la figure 3 où a également été représentée $P_M \cdot Cos^2 \Delta\emptyset/2$. Ce diagramme montre que tant que le déphasage $\Delta\emptyset_R$ est nul, le signal détecté est constant ; il ne comporte que des impulsions au moment des changements de phase de $+\frac{\pi}{2}$ à $-\frac{\pi}{2}$ et inversement. Dès que le gyromètre est en rotation une composante périodique à la fréquence de la modulation se superpose à la composante continue. Son amplitude est directement liée au décalage de phase $\Delta\emptyset_R$ dû à la rotation.

Selon l'invention, au lieu d'appliquer aux deux ondes une modulation en créneaux symétriques comme dans l'art connu rappelé ci-dessus, le modulateur est commandé pour leur appliquer une modulation en créneaux asymétriques, mais toujours de demi-période égale au temps de propagation initial, c'est-à-dire à la fréquence dite fréquence "propre" de l'interféromètre

$$f_p = \frac{1}{2to}.$$

Il va être montré ci-après qu'une telle modulation permet de détecter les éventuelles variations de temps de propagation et donc de longueur d'onde moyenne de la source, susceptibles de se produire notamment en fonction de la température.

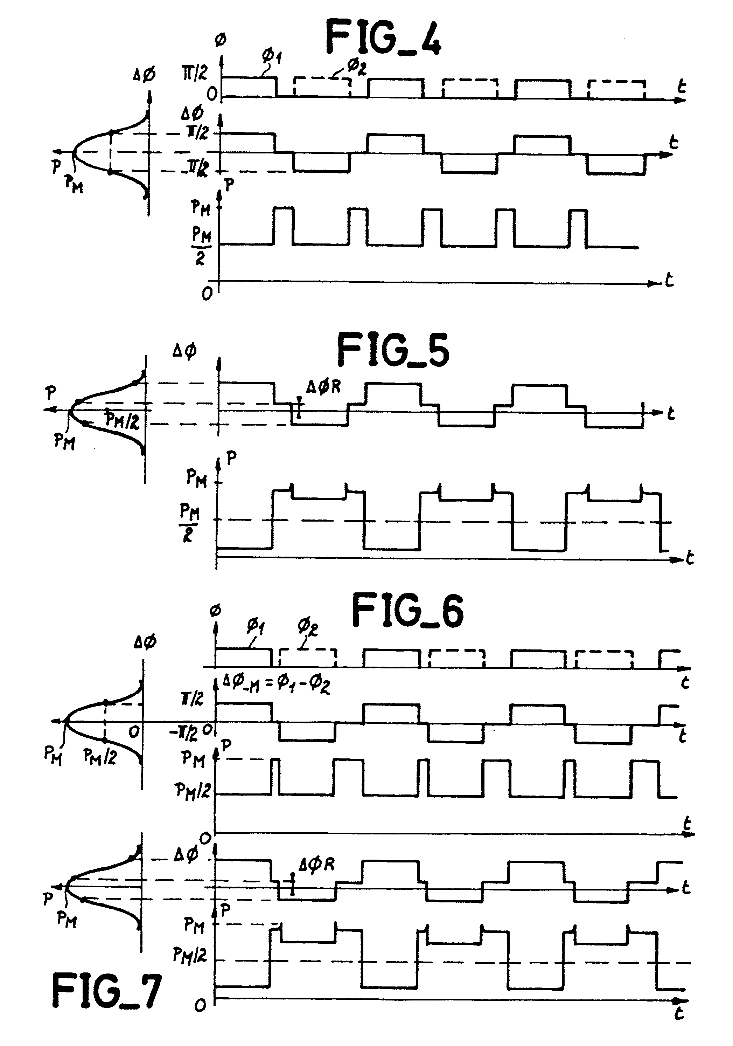

La figure 4 est un diagramme des différents signaux de modulation et du signal détecté pour une modulation simple en créneaux asymétriques, de période T égale au double du temps de propagation initial dans la fibre, $t_o$, en l'absence de rotation et en l'absence de variation de temps de propagation. $\emptyset_1$ et $\emptyset_2$ ont été représentés sur la même courbe respectivement en trait plein et en pointillés. La différence de phase $\Delta\emptyset$ des deux ondes contra-rotatives égale à $\Delta\emptyset_M = \emptyset_1 - \emptyset_2$ a ainsi des paliers à 0 au lieu de passer directement de la phase $\frac{\pi}{2}$ à la phase $-\frac{\pi}{2}$. En conséquence, en l'absence de déphasage $\Delta\emptyset_R$, le signal détecté a une composante continue au niveau $P_M/2$ et des impulsions de $P_M/2$ à $P_M$ de durée égale à la durée des paliers, c'est-à-dire fonction du rapport cyclique du signal appliqué au modulateur, à la fréquence double de la fréquence de modulation.

Lorsqu'un déphasage supplémentaire dû à la rotation $\Delta\emptyset_R$ intervient, la figure 5 montre que le déphasage $\Delta\emptyset$ est décalé de $\Delta\emptyset_R$ et génère dans le signal détecté une composante périodique à la fréquence de modulation, d'amplitude fonction du déphasage. Donc la mesure peut être effectuée comme auparavant.

Si de plus la longueur d'onde de la source varie, le temps de propagation dans l'anneau varie à cause de la dispersion. En conséquence, la période du signal de modulation qui elle n'a pas varié, n'est plus égale au double du temps de propagation. Cela se traduit par le fait que les déphasages $\emptyset_1$ et $\emptyset_2$ des deux ondes contra-rotatives ne sont plus exactement décalés dans le temps d'une demi-période et que les paliers à 0 de la différence de phase $\Delta\emptyset_R = \emptyset_1 - \emptyset_2$ n'ont plus la même durée.

La figure 6 représente ce cas. $\emptyset_1$ et $\emptyset_2$ ont été représentés en fonction du temps sur le même diagramme, $\emptyset_1$ étant en trait plein et $\emptyset_2$ en pointillés. La différence $\Delta\emptyset_M = \emptyset_1 - \emptyset_2$ est représentée par la seconde courbe. La durée des paliers à zéro n'est pas constante. En conséquence le signal détecté correspondant, P, pour $\Delta\emptyset_R = 0$ est constitué d'impulsions à la fréquence double de la fréquence de modulation, mais de durées différentes, ce qui génère un signal à la fréquence de modulation, mais en quadrature avec le signal de rotation.

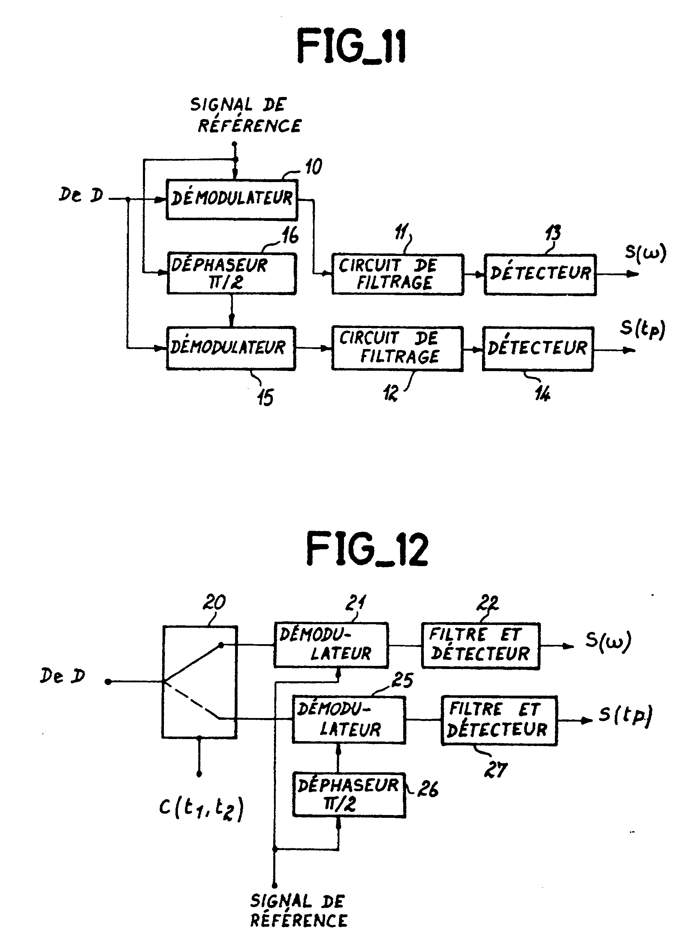

En présence d'un décalage de phase $\Delta\emptyset_R$ dû à la rotation, la figure 7 montre que la modulation de phase $\Delta\emptyset$ est décalée de $\Delta\emptyset_R$ et que le signal correspondant comporte, en plus d'impulsions à la même fréquence (double de la fréquence de modulation), d'amplitude plus faible que celles représentées sur la figure 6, mais de durées inégales comme sur la figure 6, une composante périodique à la fréquence de modulation, d'amplitude fonction du déphasage $\Delta\emptyset_R$ dû à la rotation. Ces deux signaux combinés peuvent être traités séparément, l'un étant caractéristique de la variation du temps de propagation dans la fibre et l'autre du déphasage non réciproque $\Delta\emptyset_R$. Les moyens utiles à ce traitement sont représentés sur la figure 11. Le signal issu du détecteur D est appliqué à deux démodulateurs, en phase et quadrature, 10 et 15 qui reçoivent également un signal de référence à la période de modulation respectivement en phase et en quadrature via un déphaseur $\frac{\pi}{2}$, 16. Les sorties des démodulateurs sont reliées aux entrées de deux circuits de filtrage, 11 et 12, filtrant respectivement la composante à la fréquence de modulation en phase (signal de rotation) et la composante à la fréquence de modulation en quadrature (signal de temps de propagation). Les sorties de ces deux circuits de filtrage sont respectivement reliées à des détecteurs 13 et 14 dont les signaux de sortie $S(\omega)$ et $S(tp)$ sont respectivement caractéristique de la vitesse à mesurer $\omega$ et du temps de propagation tp.

Comme cela vient d'être décrit, et comme le montre la seconde courbe de la figure 7 représentant le signal détecté en fonction du temps, lorsqu'un décalage dû à la variation de la longueur d'onde se produit la composante du signal destinée à la mesure de la rotation et la composante du signal caractéristique de cette variation de longueur d'onde sont combinées.

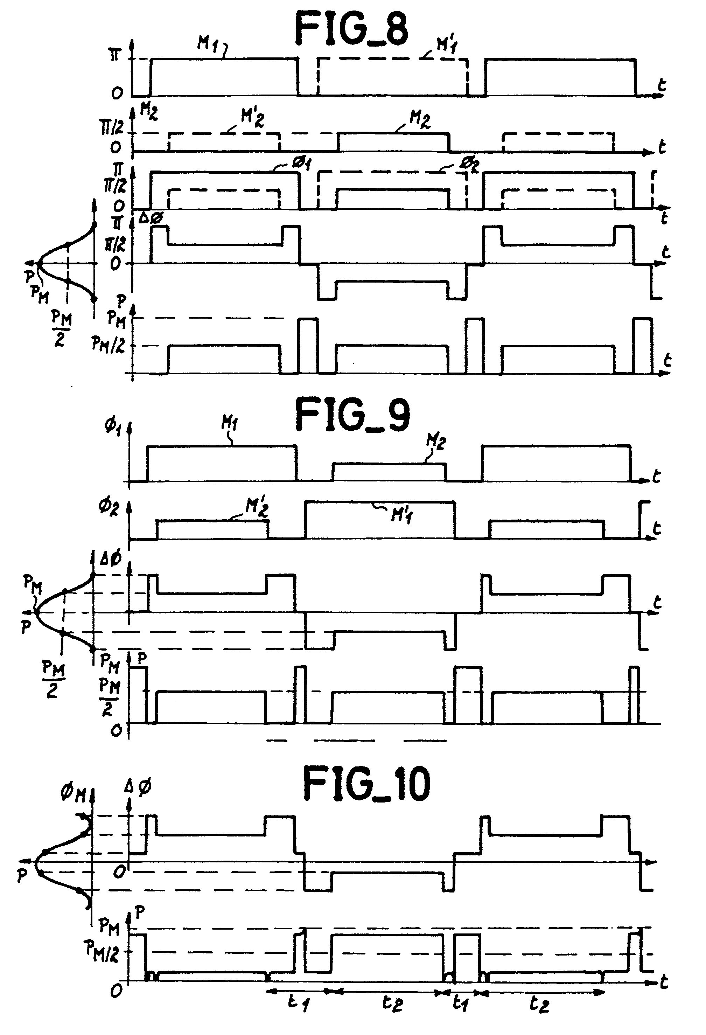

La figure 8 illustre une modulation particulière établie à partir de créneaux asymétriques qui permet de séparer, par simple découpage du signal détecté en fonction du temps, un signal utile pour la mesure de la rotation, et un signal utile pour la mesure de la variation de longueur d'onde, et qui de plus permet d'augmenter la dynamique du signal caractéristique de la variation de temps de propagation.

Le déphasage $\emptyset_1$ appliqué à l'onde modulée avant circulation dans la fibre est un signal périodique, résultant de l'addition de deux signaux de modulation, de période T = 2to, $M_1$ et $M_2$ en traits pleins, tous deux en forme de créneaux asymétriques respectivement entre 0 et $\pi$ et entre 0 et $\frac{\pi}{2}$, le second ayant une amplitude moitié de celle du premier, et tel que ses paliers au niveau élevé soient centrés par rapport aux paliers à 0 du premier. La durée des créneaux au niveau haut du signal $M_2$ est inférieure à celle des créneaux à niveau haut

4

du premier signal M1. Ainsi l'onde contra-rotative modulée après circulation dans la fibre, c'est-à-dire avec un retard égal au temps de propagation, subit une modulation par $\phi_2$ égale à la somme des signaux $M'_1$ et $M'_2$ représentés en pointillés sur les mêmes diagrammes que $M_1$ et $M_2$. Le signal résultant des interférences entre les deux ondes qui se sont propagées dans la fibre est donc modulé en phase par

$$\Delta\phi = \phi_1 - \phi_2$$
$$= (M_1 - M'_1) - (M_2 - M'_2).$$

Comme indiqué ci-dessus les amplitudes des signaux de modulation sont choisies pour effectuer alternativement une excursion de phase de 0 à $\pi$ en revenant à $\frac{\pi}{2}$, puis une excursion de phase de $\frac{\pi}{2}$ à $\pi$ en revenant à 0, et symétriquement. Le signal détecté résultant, sans autre déphasage que la modulation, comporte alternativement des impulsions de 0 à $P_M$ puis des créneaux de 0 à $\frac{P_M}{2}$ comme représenté sur la figure 8.

En présence d'une variation de la longueur d'onde moyenne de la source, le temps de propagation n'est plus égal à la demi-période du signal de modulation, et la modulation appliquée aux deux ondes contra-rotatives, par $\phi_1$ et $\phi_2$, crée une modulation $\Delta\phi$ résultante sur le signal de sortie qui n'est plus symétrique, comme le montre la figure 9. Comme dans la première variante représentée sur la figure 6, les impulsions créées de part et d'autres des créneaux n'ont plus la même durée, et le signal de sortie correspondant comporte des impulsions de 0 à $P_M$ qui ont des durées différentes, la différence étant fonction de la variation de temps de propagation par rapport à to. Si aucune rotation n'est appliquée au gyromètre, il n'y a pas d'autre différence, et comme le montre la figure 9 les paliers correspondant aux déphasages $+\frac{\pi}{2}$ et $-\frac{\pi}{2}$ donnent un signal de sortie de puissance $P_M/2$.

Si un déphasage supplémentaire $\Delta\phi_R$ dû à une rotation à mesurer se superpose à cette modulation de déphasage, une composante alternative autour de $P_M/2$ due à ce déphasage est créée dans le signal de sortie, en même temps que l'amplitude des impulsions varie légèrement comme le montre la figure 10. Mais les durées de ces impulsions, différentes de part et d'autre d'un créneau, ne sont pas affectées par ce déphasage supplémentaire et restent caractéristiques de la variation de temps de propagation dans la fibre. En conséquence, comme indiqué ci-dessus, le découpage du signal de sortie en fonction du temps permet de détecter séparément les deux effets : le signal présent durant les intervalles $t_1$, permet de donner une valeur du temps de propagation tp dans la fibre optique et le signal présent durant les intervalle $t_2$ permet de donner la valeur de la vitesse de rotation.

La figure 12 représente le circuit de traitement correspondant : le signal issu du détecteur D est appliqué à l'une ou l'autre de deux voies A et B sur commande d'un commutateur 20 par un signal de commande $C(t_1, t_2)$. La première voie A comporte un démodulateur 21 dont une entrée est reliée à la première sortie du commutateur 20, et dont l'autre entrée reçoit le signal de référence. Un circuit de filtrage et détection 22 permet d'isoler un signal caractéristique de la rotation $\omega$, $S(\omega)$. De même, la seconde voie B comporte un démodulateur 25 dont une entrée est reliée à la seconde sortie du commutateur 20 et dont l'autre entrée reçoit le signal de référence après déphasage de $\frac{\pi}{2}$ dans un déphaseur 26. Après traitement, c'est-à-dire filtrage et détection dans un circuit 27, le signal $S(tp)$ issu de cette seconde voie est caractéristique du temps de propagation, $S(tp)$.

Ce procédé de détection permet de mesurer des variations de temps de propagation $\frac{\Delta tp}{to}$ de l'ordre de 7 $\times 10^{-8}$.

L'effet de la variation de température sur la bobine de fibre, conduit à une variation relative de temps de propagation de l'ordre de $10^{-5}$ par ° Celsius. De plus, la variation de température conduit également à une variation de la longueur d'onde moyenne de la source qui crée une variation du temps de propagation par dispersion. Il est donc possible de mesurer la longueur d'onde moyenne de la source à partir de la mesure de la variation du temps de propagation comme indiqué ci-dessus, en tenant compte des effets dûs à la fibre elle-même, en fonction de la variation de température.

Pour une fibre en silice, à une longueur d'onde moyenne de 0,85 µm, une variation de longueur d'onde

$$\frac{\Delta\lambda}{\lambda} = 5.10^{-6}$$

produit une variation relative de temps de propagation de

$$\frac{\Delta tp}{tp} = 10^{-7}.$$

Si la température de la bobine est connue précisément, la mesure de la variation de temps de propagation donne la mesure de la longueur d'onde moyenne de la source (au milieu de sa bande passante).

D'une autre manière, si deux filtres complémentaires de référence sont utilisés, par exemple un même filtre interférentiel travaillant en transmission et en réflexion, de largeur inférieure à la largeur de bande de la source, et si la longueur d'onde de la source est asservie pour maintenir dans l'interféromètre un temps moyen de propagation constant pour l'onde transmise et l'onde réfléchie, le spectre de la source est alors asservi pour rester centré sur le filtre qui devient alors la nouvelle référence de longueur d'onde. Cette méthode utilise donc une référence extérieure (le filtre) mais la comparaison avec la source, qui nécessitera toujours un traitement du signal plus au moins complexe utilise les mêmes moyens de modulation que l'interféromètre.

L'invention n'est pas limitée aux variantes précisément décrites ci-dessus. En particulier d'autres types de signaux de modulation asymétriques peuvent être utilisés pour détecter les variations de temps de propagation, notamment un signal de modulation composé de créneaux de modulation à $\pi$ de durée inférieure à celles des créneaux de modulation à $\frac{\pi}{2}$ dans la seconde variante décrite. Ces différents exemples ne sont pas limitatifs.

## Revendications

1. Procédé de détection des variations de temps de propagation dans un interféromètre en anneau utilisant une modulation de phase asymétrique, caractérisé en ce qu'il consiste à effectuer une modulation de phase selon des créneaux asymétriques sur l'onde à une extrémité de l'interféromètre, la période de la modulation étant double du temps de propagation moyen dans la fibre, et à extraire du signal détecté à la sortie de l'interféromètre des impulsions à la fréquence double de la fréquence de modulation dont la durée est variable avec la variation du temps de propagation.

2. Procédé selon la revendication 1, caractérisé en ce que le signal de modulation de phase est constitué d'une suite de créneaux créant un décalage de phase de $\frac{\pi}{2}$ de durée sensiblement différente du temps de propagation moyen, suivi d'un palier à déphasage nul sur le reste de la période du signal de modulation.

3. Procédé selon la revendication 1, caractérisé en ce que le signal de différence de modulation de phase est constitué d'une suite de creneaux créant un décalage de phase de $+\frac{\pi}{-2}$, chacun de durée inférieure au temps de propagation moyen, ces créneaux étant séparés par des paliers où le déphasage est nul.

4. Procédé selon la revendication 1, caractérisé en ce que le signal de modulation est constitué d'une suite de créneaux créant sur chaque période de modulation un décalage de phase de $\frac{\pi}{2}$, puis un décalage de phase de $\pi$ séparés par des paliers à déphasage nul, les durées des décalages de $\frac{\pi}{2}$ et $\pi$ étant différentes.

5. Dispositif de détection des variations de temps de propagation dans un interféromètre en anneau, comportant un modulateur de phase, caractérisé en ce que le modulateur de phase (4) est placé à une extrémité de l'interféromètre commandé par un signal de commande ($C_{OM}$) de période double du temps de propagation initial (to) et formé de créneaux asymétriques, le signal de sortie du détecteur (D) de l'interféromètre étant traité dans un circuit de traitement (8) qui en extrait un signal à la fréquence de modulation caractéristique d'un déphasage non réciproque à mesurer S($\omega$), et un signal caractéristique des variations de temps de propagation (S(tp)).

6. Application du dispositif de détection selon la revendication 5, au contrôle de la longueur d'onde moyenne de la source (1) de l'interféromètre.

## Patentansprüche

1. Verfahren zur Erfassung von Veränderungen der Ausbreitungszeit in einem Ring-Interferometer unter Verwendung einer asymmetrischen Phasenmodulation, dadurch gekennzeichnet, daß es die Ausführung einer Phasenmodulation mittels asymmetrischer Auftastimpulse auf die Welle an einem Ende des Interferometers bei einer Modulationsperiode, die doppelt so lang wie die mittlere Ausbreitungszeit in der Phase ist, und die Entnahme von Impulsen aus dem am Ausgang des Interfermometers erfaßten Signal, deren Frequenz gleich der doppelten Modulationsfrequenz ist und deren Dauer mit der Veränderung der Ausbreitungszeit veränderlich ist, umfaßt.

2. Verfahren gemäß Anspruch 1, dadurch gekennzeichnet, daß das Phasenmodulationssignal eine Folge von Auftastimpulsen umfaßt, die eine Phasenverschiebung von $\pi/2$ erzeugen und eine Dauer besitzen, die von der mittleren Ausbreitungszeit im wesentlichen verschieden ist, gefolgt von einer Stufe mit Null-Phasenverschiebung während des Restes der Periode des Modulationssignals.

3. Verfahren gemäß Anspruch 1, dadurch gekennzeichnet, daß das Phasenmodulations-Differenzsignal eine Folge von Auftastimpulsen umfaßt, die eine Phasenverschiebung von $\pm \pi/2$ erzeugen, von denen jeder eine geringere Dauer als die mittlere Ausbreitungszeit besitzt, wobei diese Auftastimpulse durch Stufen getrennt sind, in denen die Phasenverschiebung Null ist.

4. Verfahren gemäß Anspruch 1, dadurch gekennzeichnet, daß das Modulationssignal eine Folge von Auftastimpulsen umfaßt, die in jeder Modulationsperiode eine Phasenverschiebung von $\pi/2$ und dann eine Phasenverschiebung von $\pi$ erzeugen, die durch Stufen mit Phasenverschiebung Null getrennt sind, wobei die jeweilige Dauer der Verschiebungen um $\pi/2$ bzw. um $\pi$ verschieden ist.

5. Vorrichtung zur Erfassung von Veränderungen der Ausbreitungszeit in einem Ring-Interferometer, mit einem Phasenmodulator, dadurch gekennezeichnet, daß der Phasenmodulator (4) an einem Ende des Interferometers angeordnet ist, wobei das Interferometer von einem Steuersignal ($C_{OM}$) gesteuert wird, dessen Periode gleich der doppelten anfänglichen Ausbreitungszeit (to) ist und aus asymmetrischen Auftastimpulsen gebildet wird, wobei das Ausgangssignal des Detektors (D) des Interferometers in einer Verarbeitungsschaltung (8) verarbeitet wird, die aus ihm ein Signal $S(\omega)$ mit der Modulationsfrequenz, das für eine zu messende, nichtreziproke Phasenverschiebung charakterstisch ist, und ein Signal (S(tp)), das für die Veränderungen der Ausbreitungszeit charakteristisch ist, entnimmt.

6. Anwendung der Erfassungsvorrichtung gemäß Anspruch 5 auf die Steuerung der mittleren Wellenlänge der Quelle (1) des Interferometers.

## Claims

1. A method for the detection of variations in the propagation time in an annular interferometer utilizing asymmetric phase modulation, characterized in that it consists of producing a phase modulation in accordance with asymmetric gating pulses on the wave at one end of the interferometer, the period of modulation being twice the mean propagation time in the fiber, and of extracting from the detected signal at the exit of the interferometer pulses with a frequency twice the modulation frequency whose duration varies as a function of the variation in the time of propagation.

2. A method as claimed in claim 1, characterized in that the phase modulation signal is constituted by a series of gating pulses with a $\pi/2$ phase shift with a duration essentially different to the mean propagation time, followed by a plateau with zero phase shift for the remainder of the period of the modulation signal.

3. The method as claimed in claim 1, characterized in that the phase difference modulation signal is constituted by a series of gating pulses producing a phase shift of $+ (\pi/- 2)$, each one being of a duration less than the mean propagation time, such gating pulses being separated by plateaus in which the phase shift is zero.

4. The method as claimed in claim 1, characterized in that the modulation signal is constituted by a series of gating pulses producing, for each period of modulation, a phase shift of $\pi/2$, then a $\pi$ phase shift separated by plateaus with a phase shift of zero, the durations of the $\pi/2$ and $\pi$ shifts being different.

5. A device for the detection of variations in the propagation time in an annular interferometer, comprising a phase modulator, characterized in that the said phase modulator (4) is positioned at one end of the interferometer controlled by a control signal ($C_{OM}$) with a period twice the initial propagation time (to) and formed by asymmetric gating pulses, the output signal of the detector (D) of the interferometer being processed in a treatment circuit (8) which extracts therefrom a signal at the modulation frequency which is characteristic of the a non-reciprocal phase shift $S(\omega)$ to be measured, and a signal which is characteristic of the variations in the time of propagation (S(tp)).

6. The application of the detection device as claimed in claim 5 to control of the mean wave length of source (1) of the interferometer.

# FIG_1

# FIG_2

# FIG_3

FIG_4

FIG_5

FIG_6

FIG_7

# FIG_8

# FIG_9

# FIG_10

# FIG_11

SIGNAL DE RÉFÉRENCE

De D

DÉMODULATEUR — 10

DÉPHASEUR $\pi/2$ — 16

CIRCUIT DE FILTRAGE — 11

DÉTECTEUR — 13 → $S(\omega)$

DÉMODULATEUR — 15

CIRCUIT DE FILTRAGE — 12

DÉTECTEUR — 14 → $S(t_p)$

# FIG_12

De D

20

$C(t_1, t_2)$

DÉMODU-LATEUR — 21

FILTRE ET DÉTECTEUR — 22 → $S(\omega)$

DÉMODU-LATEUR — 25

FILTRE ET DÉTECTEUR — 27 → $S(t_p)$

DÉPHASEUR $\pi/2$ — 26

SIGNAL DE RÉFÉRENCE